# EUROPÄISCHE PATENTSCHRIFT

(11) **EP 1 436 070 B1**
(45) Veröffentlichungstag und Bekanntmachung des Hinweises auf die Patenterteilung: **19.01.2005**
(21) Anmeldenummer: 02776846.4
(22) Anmeldetag: 19.10.2002
(51) Int. Cl.: B01D 63/08, B01D 65/04, B01D 69/06, C02F 3/06, B01D 69/10

(54) **PLATTENFILTRATIONSMODUL**
PLATE FILTRATION MODULE
MODULE DE FILTRATION A ELEMENTS PLATS

(30) Priorität: 24.10.2001 DE 10151833
(43) Veröffentlichungstag der Anmeldung: 14.07.2004
(73) Patentinhaber: A3 Abfall-Abwasser-Anlagentechnik GmbH, 45881 Gelsenkirchen (DE)
(72) Erfinder: BRÜSS, Ulrich, 48301 Nottuln (DE)
(74) Vertreter: Vomberg, Friedhelm, Dipl.-Phys.
(86) Internationale Anmeldenummer: PCT/DE2002/003956
(87) Internationale Veröffentlichungsnummer: WO 2003/037489

(56) Entgegenhaltungen:
- EP-A- 0 591 117
- EP-A- 0 662 341
- US-A- 4 770 776
- PATENT ABSTRACTS OF JAPAN vol. 1999, no. 14, 22. Dezember 1999 (1999-12-22) & JP 11 244672 A (DAISEN MEMBRANE SYSTEMS KK), 14. September 1999 (1999-09-14)
- PATENT ABSTRACTS OF JAPAN vol. 1995, no. 02, 31. März 1995 (1995-03-31) & JP 06 327949 A (NITTO DENKO CORP), 29. November 1994 (1994-11-29)
- PATENT ABSTRACTS OF JAPAN vol. 2000, no. 24, 11. Mai 2001 (2001-05-11) & JP 2001 190936 A (TOSHIBA CORP), 17. Juli 2001 (2001-07-17)

## Beschreibung

Die Erfindung betrifft ein Filtrationsmodul zur Reinigung von Abwasser mit mehreren jeweils mindestens eine Öffnung zur Entwässerung ihres Innenraumes aufweisende Filtermembrantaschen, die vertikal, parallel und vorzugsweise in gleichem Abstand zueinander in einem starren Halter so angeordnet sind, dass die zwischen benachbarten Filtermembrantaschen liegenden Zwischenräume intensiv von einer Flüssigkeit durchströmbar sind, wobei die Filtermembrantaschen an gegenüberliegenden geschlossenen Seiten des Halters auf ganzer Länge fest mit dem Halter verbunden sind und einen flexiblen flüssigkeitsdurchlässigen Kern aufweisen. Herkömmliche Filtersysteme zur Abwasserreinigung bestehen aus einer Filtrationseinheit mit einem oben und unten offenen kastenförmigen Gehäuse, in dem mehrfach Membrankassetten angeordnet sind, die vertikal und parallel zueinander beabstandet von benachbarten Membrankassetten angeordnet sind. Die Zwischenräume zwischen den einzelnen Membrankassetten bilden Durchgänge, die durchströmbar sind. Die einzelnen Membrankassetten beinhalten eine flache Filterplatte, deren Oberfläche mit einer Filtrationsmembran bedeckt ist. Unterhalb dieses Kastens mit den Membrankassetten ist ein Gehäuse angeordnet, das eine Einrichtung zur Luftzufuhr beinhaltet, durch die eine Aufwärtsströmung erzeugt wird, mittels derer die Flüssigkeit entlang der Membrankassetten strömt. Jede der Membrankassetten besitzt Abzugsleitungen, die in eine Flüssigkeitssammelleitung münden, in der sich eine Saugpumpe befindet, über die die gefilterte Flüssigkeit abgezogen werden kann. In der EP 0 662 341 B1 wird als Nachteil diese Filtersystems angegeben, dass die verwendeten Filterplatten aus Vollmaterial zur Folge haben, dass nur eine dünne Schicht im Durchgang der durchtretenden Flüssigkeit zwischen der Filtrationsmembrane und der Filterplattenoberfläche gebildet wird, weshalb ein hoher Durchflusswiderstand gegeben ist. Da der transmembrane Druck nicht gleichmäßig auf die gesamte Oberfläche der Filtrationsmembrane der Membrankassette verteilt wird, kommt es zu einer Druckkonzentrierung in der Umgebung der Wanne, die mit der Flüssigkeitssammelleitung verbunden ist, so dass die Filtration in Teilen des Kastens zu einer wachsenden Verschleimung führt. Um dieses Problem zu beheben, wird ein Modul mit Filtrationsmembranen vorgeschlagen, bei dem die Membranstützplatte einer jeden Membrankassette hohl ausgebildet ist, wobei sich die Stützplatte aus einer starren Rahmenstruktur zusammensetzt, die solide Kemstücke und dazwischenliegende Ausnehmungen trägt. In diese Membranstützplatte ist eine Austrittsöffnung angeordnet, über die die gefilterte Flüssigkeit abgezogen werden kann.

Nach einem weiteren Vorschlag gemäß der EP 0 662 341 B1 soll die Membrankassette eine taschenförmige Filtrationsmembran umfassen, welche die äußere Oberfläche einer Membranstützplatte bedeckt, die hohl ausgebildet ist und aus einer Vielzahl von stangenförmigen, steifen Membranstützelementen besteht, die parallel zueinander angeordnet sind. Zu einem Ende dieser Membranstützelemente ist ein kuppelndes Rahmenelement angeordnet, so dass prinzipiell in dieser Filtermembrantasche ebenfalls ein starrer rahmenförmiger Körper angeordnet ist. Ähnliche Lösungen mit starren, rahmenartigen Filtrationskassetten werden auch in der EP 0 602 560 B1 oder der EP 0 510 328 B1 beschrieben. Gleichgültig, ob eine Vollkörperplatte oder ein Rahmenprofil verwendet wird, bleibt jedoch der Nachteil eines lokal unterschiedlichen Strömungswiderstandes, durch den eine gleichmäßige Strömungsverteilung behindert und damit der Reinigungseffekt gehemmt wird. Dieser nachteilige Effekt wird mit zunehmender Einsatzdauer des Filtersystems noch dadurch verstärkt, dass sich in den Randbereichen der Kassetten Partikel ablagern.

Ungünstig ist auch wegen der erforderlichen Platten- oder Rahmendicke die schlechte Raumausnutzung bzw. das schlecke Verhältnis zwischen Filtrationsfläche und genutztem Raum. Insbesondere in Fällen, wo zum Einsatz des Filtersystems nur ein begrenzter Raum zur Verfügung steht, können die relativ großvolumigen Filtrationssysteme nicht oder zumindest nur unzureichend eingesetzt werden.

Bei der beispielsweise in der EP 0 662 341 B1 beschriebenen Lösung muss auch jede einzelne Membranplatte mit einer Flüssigkeitsabsaugeinrichtung versehen werden, die wiederrum an einem zentralen Flüssigkeitssammler angeschlossen ist. Dies hat eine Vielzahl von Verbindungsstellen zwischen den Membranplatten und dem Filtratsammler zur Folge, so dass die Gefahr der Entstehung von Leckagestellen stark erhöht ist. Treten Leckagen auf, so führt dies zu einer unerwünschten Verunreinigung des Filtrates.

Die JP 11-244672 offenbart ein Filtrationsmodul, das aus vertikal und parallel angeordneten flachen flexiblen Membrantaschen besteht, welche auf gegenüberliegenden geschlossenen Seiten an den unteren Ecken mit einem quaderförmigen Halter verbunden sind. Das Filtrationsmodul weist einen flüssigkeitsdurchlässigen flexiblen Kern auf. Der Halter ist mit einer Absaugleitung versehen.

Es ist daher Aufgabe der vorliegenden Erfindung, ein Filtrationsmodul zu schaffen, das eine optimierte Anströmung zur verbesserten Flüssigkeitsreinigung und eine gleichmäßige Differenzdruckverteilung gewährleistet. Das Filtrationsmodul soll vorzugsweise eine konstruktive Einheit mit einem Strömungskanal und einer Anströmeinrichtung bilden, die nicht oder weniger leckagegefährdet ist und deren Aufbau konstruktiv einfach ist.

Diese Aufgabe wird durch das Filtrationsmodul nach Anspruch 1 gelöst, das erfindungsgemäß dadurch gekennzeichnet ist, dass die Filtermembrantaschen im wesentlichen flach und flexibel ausgebildet und an gegenüberliegenden geschlossenen Seiten des quaderförmigen Halters fest mit dem Halter verbunden sind, dass der Halter mindestens eine Absaugleitung zur Abführung der über die Filtermembrantaschenöffnungen abgesaugten Flüssigkeit aufweist und dass die Filtermembrantaschen einen flexiblen, flüssigkeitsdurchlässigen Kern und/oder mehrere flexible flüssigkeitsdurchlässige Kernelemente aufweisen. Die besonderen Vorteile dieses Filtrationsmoduls liegen in einer vereinfachten Herstellung, die sich insbesondere in geringeren Herstellungskosten ausdrückt, sowie in einer gleichmäßigen Differenzdruckverteilung über die gesamte Filtermembrantasche, die in Folge der fehlenden starren platten- oder rahmenförmigen Elemente auch in weitaus geringerem Maße einer Filtermembranschädigung ausgesetzt sind. Im Gegensatz zu der nach dem Stand der Technik bekannten Lösung mit Filtrationskassetten ist die Absaugleitung bzw. sind die Absaugleitungen auch in einem starren Halter integriert, so dass deren Beschädigungen bzw. hierdurch entstehende Leckagen ausgeschlossen sind. Die flexiblen flüssigkeitsdurchlässigen Kerne oder Kernelemente schaffen einen definierten, stets gleichbleibenden Membrantascheninnenraum.

Weiterbildungen der Erfindung sind in den Unteransprüchen beschrieben.

So bestehen die Filtermembrantaschen im einfachsten Fall aus zwei ringsum miteinander verbundenen Membranfolien, die vorzugsweise durch Kleben, Schweißen oder durch Vergießen mit einem weiteren Material, das weiterhin den vorzugsweise gegossenen Halter bildet, verbunden sind. Hierdurch können die Filtermembrantaschen leicht und kostengünstig hergestellt werden.

Nach einer weiteren Ausgestaltung der Erfindung besteht die Membranfolie aus einem duroplastischen und/oder elastomeren Kunststoff. Vorzugsweise werden als Duroplast Phonalharz und als Elastomer Polyethylen, Polyacrylnitrid, Polyethersulfon und/oder PVC verwendet. Solche Folien besitzen eine hohe mechanische Belastbarkeit. Insbesondere bestand bei den nach dem Stand der Technik verwendeten Membranen die Gefahr, dass in der Flüssigkeit enthaltene scharfkantige Partikel Schäden verursachten, weswegen zum Schutz der nach dem Stand der Technik bekannten Filtrationseinrichtungen aufwendige Vorreinigungen der Flüssigkeit zur Entfernung diese scharfkantigen Partikel erforderlich gewesen sind. Dies kann durch Einsatz der erfindungsgemäß zu verwendenden Folien vermieden werden, die auch bei etwaigen Wartungsarbeiten besser vor Beschädigungen geschützt sind.

Nach einer weiteren Ausgestaltung der Erfindung besteht der Halter aus einem quaderförmigen Rahmen, der die Filtermembrantaschen umschließt bzw. innerhalb dessen die Filtermembrantaschen parallel beabstandet eingespannt sind. Insbesondere wird ein Halter aus Kunststoff gewählt, vorzugsweise in Form eines gegossenen duroplastischen Kunstharzkörpers, wobei mit dem Gießvorgang zugleich die Verbindung zu den Filtermembrantaschen hergestellt wird. Verwendbare Duroplaste sind insbesondere Polyesther mit oder ohne Füllstoffe oder Polyurethan.

Nach einer weiteren Ausgestaltung besitzen alle Filtermembrantaschen einen gemeinsamen Entwässerungssammler.

Als Material für den flexiblen flüssigkeitsdurchlässigen Kern bietet sich ein Stützvlies oder ein Gittergewebe aus Stützgewebe an, Gittergewebematerialien sind vorzugsweise Polypropylen, Polyethylen, ein Gasfasergewebe, PVC oderein Phenolharzgewebe. Bei schwammartigem Stützvlies als Kemmaterial bieten sich insbesondere Polypropylen, Polyethylen, Polyether PVC (als "nicht gewebte Stoffe") oder ein Glasfasergewebe an. Alternativ oder zusätzlich werden einzelne Kernelemente aus flexiblen flüssigkeitsdurchlässigen Rippen verwendet, die vorzugsweise an der Membranfolieninnenseite befestigt sind oder auf der Membraninnenseite angeordnet sind und ggf. aus dem Membranmaterial selbst bestehen. Diese Rippen sind nach einer weiteren Ausführungsform der Erfindung im wesentlichen parallel zueinander angeordnet, wobei vorzugsweise die sich gegenüberliegenden Filtermembraninnenflächen jeweils parallele Rippen aufweisen, die kreuzweise zu den Rippen der gegenüberliegenden Seite angeordnet sind. Durch diese Maßnahmen bleibt der Filtermembrantascheninnenraum stets gleich groß, selbst dann, wenn durch ungleichmäßige Strömungsverhältnisse ein Filtermembranflächenstück stärker als benachbarte Flächenstücke belastet wird.

Nach einer weiteren Ausführungsform der Erfindung können die Rippen zur Verstärkung der Verbindung miteinander oder über eine innere Stützschicht haftend verbunden sein. Eine haftende Verbindung kann auch zwischen einem flüssigkeitsdurchlässigen Kern aus einem schwammartigen Stützvlies und einer Membran bestehen. Durch diese Maßnahme ist es möglich, die eingesetzten Filtermembrantaschen durch Umkehrung der Filtratflussrichtung rückzuspülen und eine verbesserte Deckschichtkontrolle zu erzielen. Des weiteren wird durch ein flächenhaftes Anhaften der Membranfolie an den Rippen oder an einem flüssigkeitsdurchlässigen Kern ein die Membran auf Dauer schädigendes Flattern der Membran verhindert.

Zur Verstärkung der Klebe- bzw. Schweißnaht gegenüber aufsteigenden Strömung besitzt die Membrantasche nach einer weiteren Ausgestaltung der Erfindung Kunststoffeinlegestreifen.

Um zu gewährleisten, dass die Einrichtung zur Schaffung eines Flüssigkeitsstromes stets in Bezug auf die Filtermembrantaschen optimal angeordnet ist, kann der Halter mit einem unterstellten Aufströmkanal verbunden sein, in dem eine strömungserzeugende Einrichtung wie eine Pumpe und/oder Belüftung und/oder mindestens ein strömungslenkender Leitkörper fest installiert angeordnet ist/sind. Diese Leitkörper sorgen dafür, dass der Reinigungsstrom in optimaler Weise auf der Unterseite des Filtrationsmoduls verteilt wird.

Nach einer weiteren Ausgestaltung der Erfindung und zur Erhöhung der Funktionskapazität sind vorzugsweise mehrere, jeweils mit Filtermembrantaschen bestückte Halter übereinander angeordnet.

Nach einer weiteren Ausgestaltung der Erfindung weisen die Filtermembrantaschen an ihren unteren Rändern befestigte Reinigungsfasern auf, die sich in den Tascheninnenraum erstrecken. Vorzugsweise bestehen diese Reinigungsfasern aus Kunststoff und besitzen ein spezifisches Gewicht, das kleiner ist als das spezifische Gewicht der zur reinigenden Flüssigkeit. Weiterhin vorzugsweise sind die Reinigungsfasern elastisch und/oder haben einen Durchmesser, der zwischen 0,5 mm und einer Breite ist, die 10 bis 95 % der Spaltbreite der Filtermembrantasche beträgt. Die genannten Fasern werden durch den Flüssigkeitsstrom, der durch das Modul fließt, auf den Filtrationsmembranen bewegt. Diese ständige Bewegung der Fasern sorgt dafür, dass eine verbesserte mechanische Reinigung der Filtrationsmembran erfolgt. Dies schafft den Vorteil, dass die Intervalle, innerhalb denen die Module chemisch gereinigt werden müssen, wesentlich verlängert werden können. Die bisher nach dem Stand der Technik notwendige häufige Entnahme der Module aus dem Filtrationsbecken ist somit nicht mehr erforderlich. Des weiteren ist es durch den Einsatz der Fasern möglich, hydraulisch schwächer durchströmte Modulbereiche verstärkt mechanisch zu reinigen und so für einen Erhalt der erforderlichen freien Filtrationsfläche zu sorgen. Durch die verstärkte mechanische Reinigung kann auch die zur Erzeugung des Reinigungsstromes eingetragene Gasmenge gegenüber Ausführungsformen ohne Fasern erheblich reduziert werden. Dies führt zu einer Einsparung an Betriebskosten.

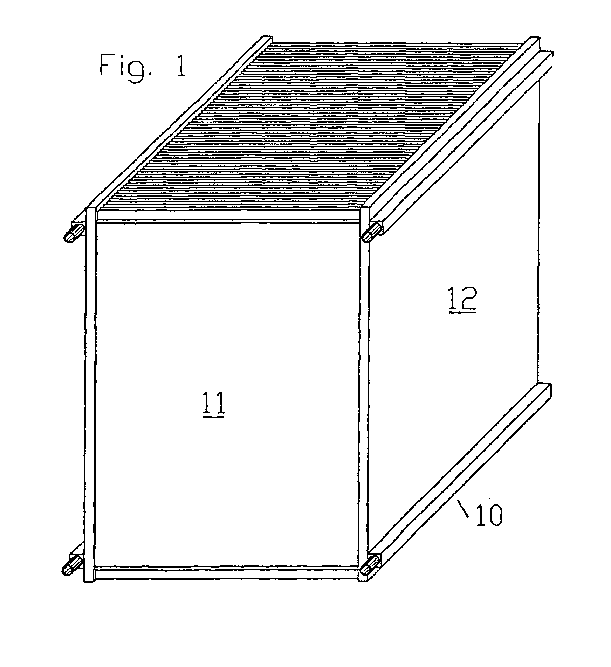

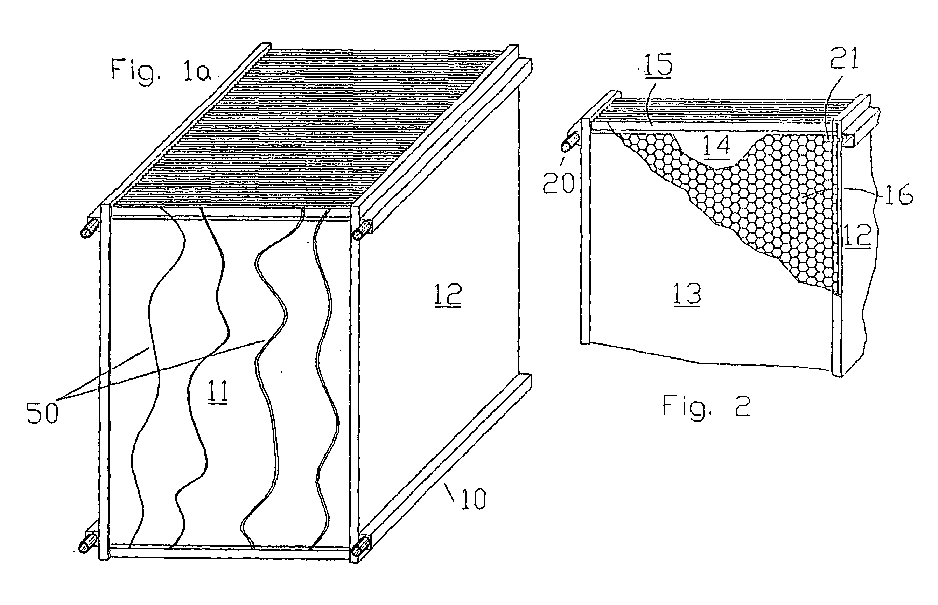

Ausführungsbeispiele der Erfindung, anhand derer weitere Details und vorteile erörtert werden, sind in den Zeichnungen dargestellt. Es zeigen
- Fig. 1: eine perspektivische Ansicht eines erfindungsgemäßen Filtrationsmoduls,
- Fig. 1 a: eine Ausführungsvariante gemäß des Filtrationsmoduls nach Fig. 1,
- Fig. 2: eine teilgeschnittene Teilansicht des Filtrationsmoduls nach Anspruch 1 und
- Fig. 3 bis 7: jeweils Teilschnittansichten von Filtermembrantaschen in unterschiedlichen Ausführungen.

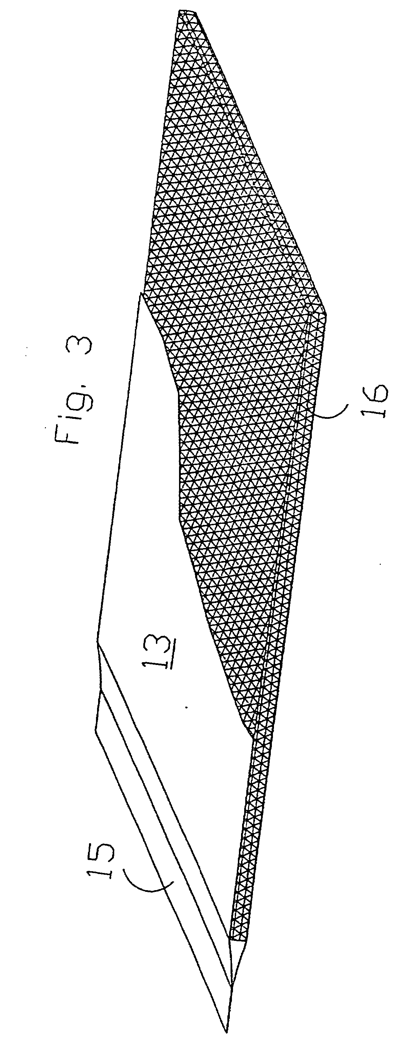

Das in Fig. 1 dargestellte Filtrationsmodul besteht aus einem quaderförmigen Behälter 10 mit geschlossenen Seitenwänden 11, 12. Der Behälter 10 ist oben und unten offen, so dass Flüssigkeit hindurchströmen kann. In dem Behälter und mit diesem Behälter 10 verbunden sind mehrere flache, flexible Filtertaschen nebeneinander und parallel zueinander ausgerichtet angeordnet. Die Filtertaschen besitzen Membranfolien 13 und 14 (siehe Fig. 2), die an ihrem oberen und unteren Ende über eine Schweiß- oder Klebenaht 15 verschlossen sind. Zwischen den Membranfolien 13 und 14 ist ein Stützvlies 16 und/oder mehrere flexible Rippen 17, 18 oder 19 angeordnet. Die Filtermembrantaschen sind an ihren jeweiligen, in der Zeichnung vertikal dargestellten Seiten ebenfalls verschlossen und mit der Seitenwand 12 sowie der gegenüberliegenden Seitenwand verbunden. Dies kann beispielsweise dadurch realisiert sein, dass die Seitenränder mit der Seitenwand 12 und der gegenüberliegenden Wand mittels eines Gießverfahrens befestigt sind.

Das in Fig. 1a dargestellte Filtrationsmodul entspricht dem vorbeschriebenen Filtrationsmodul, jedoch sind hier zusätzlich am unteren Rand der Filtermembrantasche Reinigungsfasern 50 befestigt. Diese Reinigungsfasern bestehen aus einem elastischen Kunststoffmaterial, das ein spezifisches Gewicht besitzt, das kleiner als das spezifische Gewicht des zu reinigenden Abwasserstroms ist. Die Reinigungsfasern können im Querschnitt rund, rechteckig, oval oder auch sonstwie geformt sein. Wesentlich ist lediglich, dass die Reinigungsfasem durch den Flüssigkeitsstrom hin und her bewegt werden und hierbei die Filtermembrationstaschenflächen reibend berühren. Vorzugsweise beträgt der Mindestfaserdurchmesser bzw. deren Mindestbreite 0,5 mm. Die Obergrenze für die Faserbreite liegt bei 95 % der Spaltbreite der Filtermembrantasche.

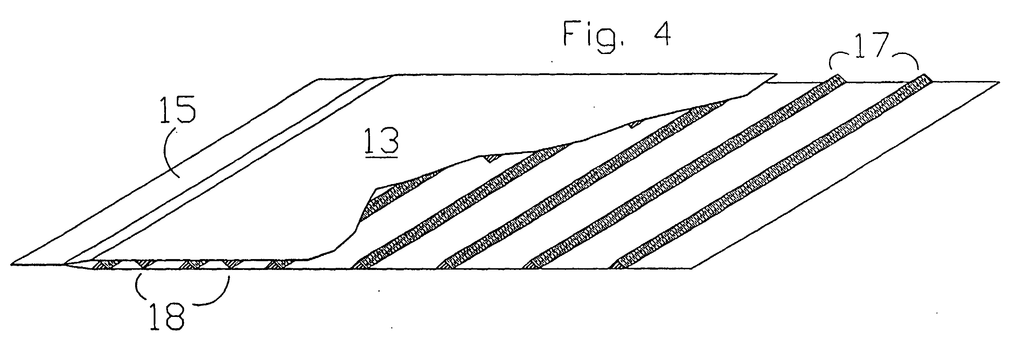

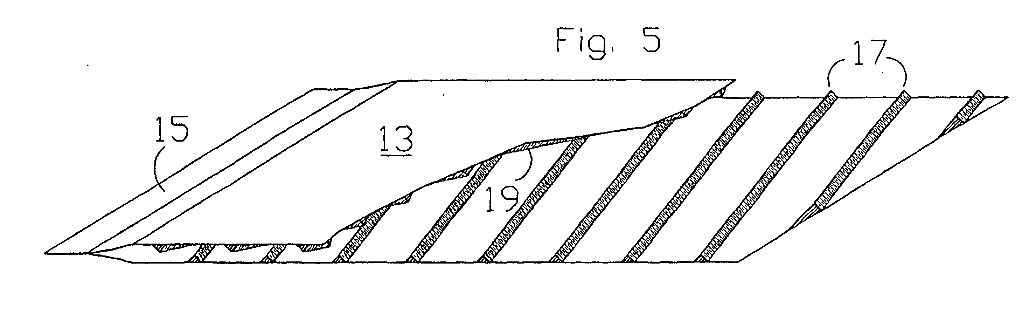

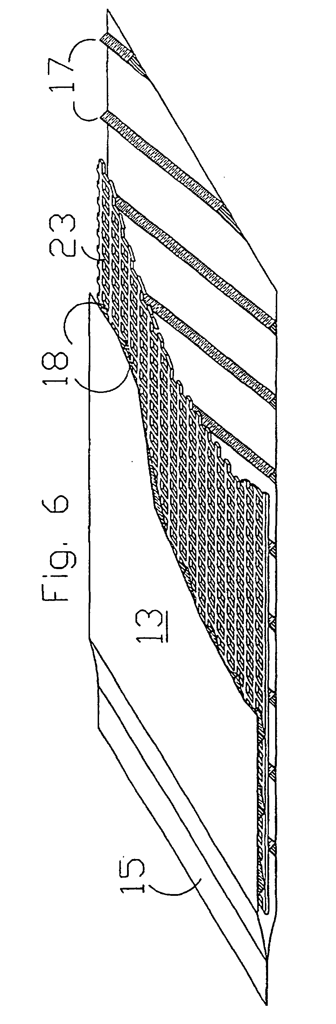

Wie aus Fig. 3, 4 und 5 ersichtlich ist, erstrecken sich der Vliesstützkörper oder die Rippen im wesentlichem über den gesamten Innenhohlraum. Die Anordnung der Rippen 17 und 18 gemäß Fig. 4 ist parallel gewählt, während die Anordnung der Rippen 17 und 19 nach Fig. 5 derart gewählt ist, dass jeweils die Rippen 17 und die Rippen 19 parallel zueinander ausgerichtet sind, wobei jedoch die Rippen 17 und 19 vertikal zueinander stehen. Bei der Ausführungsform nach Fig. 6 befindet sich in der Filtermembrantasche, d.h. zwischen den Membranfolien 13 und 14 sowohl ein Stützvlies 16 als auch Rippen 17 und 18, wobei letztere mit der Membranfolieninnenseite verbunden sind. Die Rippen 17 und 18 stehen jeweils vertikal zueinander.

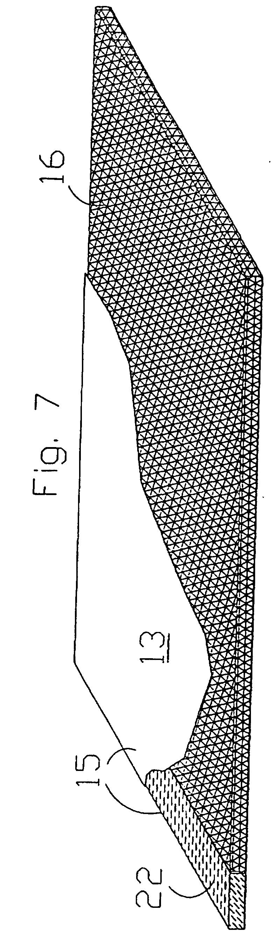

Bei der in Fig. 7 dargestellten Ausführungsform wird die Klebe- bzw. Schweißnaht der Membrantasche durch einen Streifen 22 aus Kunststoff, beispielsweise aus Polyesther, Polyurethan, ABS, Polyethylen, Polyphenol oder PVC verstärkt. Der Streifen 22 weist die gleiche oder eine ähnliche Dicke auf wie das eingesetzte Kemmaterial und wird beiseitig mit dem Membranteil verklebt oder verschweißt. Dadurch kann die Membrantasche bei erhöhten Strömungsgeschwindigkeiten diesen noch besser widerstehen. Des weiteren bietet der Einsatz des Streifens 22 noch die Möglichkeit, die Fertigung der Membranmodule weiter zu vereinfachen, da er eine Führung für das Kernmaterial darstellt und beim Vergussvorgang der einzelnen Taschen mit dem Taschenhalter eine formstabilisierende Funktion aufweist.

Von den in Fig. 3 bis 7 dargestellten Filtermembrantaschen sind entsprechend der Größe des Kastens 10 in gewünschter Anzahl parallel zueinander und stets gleichförmig von benachbarten Membrantaschen angeordnet. Jede Membrantasche weist einen flexiblen, flüssigkeitsdurchlässigen Kern bzw. Kernelemente auf, welcher beidseitig von Membranfolien 13 und 14 umgeben ist. Die Membranfolien sind an zwei gegenüberliegenden Seiten miteinander verklebt oder verschweißt, wodurch die Membrantaschendicke bis auf die Dicke der miteinander verklebten bzw. verschweißten Membrane reduziert ist. Hierdurch wird ein Strömungsprofil erreicht, welches zu einer Verringerung des Strömungswiderstandes führt und eine verbesserte Strömung der Filtermembrantaschen gewährleistet. Der flexible, flüssigkeitsdurchlässige Kern und/oder die Kernelemente der Filtermembrantaschen sorgen dafür, dass trotz der Druckdifferenz zwischen der Membranaußen- und der Membraninnenseite während des Filtrationsvorgangs ein filtratgefüllter Raum zwischen den beiden Folien 13 und 14 bestehen bleibt. Dieser Raum dient dem Filtratabtransport. Die verbleibenden zwei Seiten jeder Filtermembrantasche sind durch einen Vergussprozess fest mit dem sie umgebenden Halter verbunden. Der Halter bzw. die sich gegenüberliegenden Wände 12 weisen ferner Saugkanäle 20 zur Entwässerung jeder Filtermembrantasche auf, wozu diese eine Öffnung 21 besitzt. Der Vorteil dieser Ausgestaltung führt dazu, dass zwischen den Filtermembrantaschen und dem Filtratsammler keine separaten Verbindungen hergestellt werden müssen. Die Filtermembrantaschen besitzen ein optimales Filtrationsflächen-/Raum-Verhältnis. Das Filtrationsmodul ist daher auch in Anwendungen mit begrenztem Raumangebot einsetzbar. die mechanische Beständigkeit der Membranfolien wird dadurch gewährleistet, dass robuste Baterrieseparatorfolien für den Filtrationsprozess eingesetzt werden.

Die einfache Filtrationsmodulkonstruktion wird dadurch erreicht, dass die eingesetzten Membranfolien zunächst verklebt und anschließend mit Kunstharz zu einem "Taschen"-Halter vergossen werden. Die Einheit aus Membrantaschen und Taschenhalter bildet ein Filtrationsmodul. Hierdurch kann in einem Fertigungsschritt eine Vielzahl von Filtermembrantaschen zu einem Modul zusammengefasst werden.

Der Halter bildet die äußere Begrenzung des Filtrationsmoduls, so dass ein zusätzlicher separater Membranaufnahmekasten entfällt. Der Halter 10 wird fest mit einem nicht dargestellten Aufströmkanal verbunden, der unterhalb des Taschenhalters angeordnet ist. In diesem Aufströmkanal ist - wie grundsätzlich nach dem Stand der Technik, z.B. aus der EP 0 662 341 B1 bekannt - eine strömungserzeugende Einrichtung wie eine Belüftungseinrichtung oder eine Pumpe enthalten. Hierdurch ist stets eine vollständige, eigenständig funktionelle Einheit geschaffen, die in den flüssigkeitsgefüllten Arbeitstank in Form des Kastens 10 integriert wird. Ein aufwendiges Einführen von Modulen zur Kopplung von Ober- und Unterkasten entfällt.

Prinzipiell können mehrere Filtrationsmodule 10 direkt angeordnet werden, wodurch eine verbesserte Ausnutzung des Einigungsstromes erreicht wird.

Die zur Filtration eingesetzte Batterieseparatorfolie besitzt an ihrer Innenseite Rippen 17, 18 und 19, welche als Distanzstücke zur Offenhaltung des Filtratraumes genutzt werden. die Rippen werden entweder untereinander verklebt, um eine bessere Steifigkeit der Filtertasche zu erreichen oder über ein Stützgewebe in Form eines Stützvlies miteinander verbunden.

## Patentansprüche

1. Filtrationsmodul zur Reinigung von Abwasser mit mehreren, jeweils mindestens eine Öffnung (21) zur Entwässerung ihres Innenraumes aufweisende im Wesentlichen flach und flexibel ausgebildete Filtrationsmembrantaschen, die vertikal, parallel und vorzugsweise in gleichem Abstand zueinander in einem starren, quaderförmigen Halter so angeordnet sind, dass die zwischen benachbarten Filtermembrantaschen liegenden Zwischenräume von einer Flüssigkeit durchströmbar sind, wobei der Halter mindestens eine Absaugleitung (20) zur Abführung der über die Filtermembrantaschenöffnungen (21) abgesaugten Flüssigkeit aufweist, und die Filtermembrantaschen einen flexiblen, flüssigkeitsdurchlässigen Kem (16) und/oder mehrere flexible flüssigkeitsdurchlässige Kernelemente (17, 18, 19) aufweisen
**dadurch gekennzeichnet,**
**dass** die Filtermembrantaschen an gegenüberliegenden geschlossenen Seiten (12) des Halters auf ganzer Länge fest mit dem Halter verbunden sind.

2. Filtrationsmodul nach Anspruch 1, **dadurch gekennzeichnet, dass** die Filtermembrantaschen aus zwei ringsum miteinander verbundenen Membranfolien (13, 14) besteht, die vorzugsweise durch Kleben, Schweißen oder durch Vergießen mit einem weiteren Material, das weiterhin den vorzugsweise gegossenen Halter bildet, miteinander verbunden sind, wobei vorzugsweise die Membranfolien (13, 14) aus einem duroplastischen und/oder elastomeren Kunststoff, vorzugsweise aus einem duroplastischen Phenolharz, Polyethylen, Polyacrylnitrid, Polyethersulfon und/oder Polyvinylchlorid (PVC) bestehen.

3. Filtrationsmodul nach einem der Ansprüche 1 oder 2, **dadurch gekennzeichnet, dass** der Halter (10) aus Kunststoff besteht, vorzugsweise aus einem gegossenen duroplastischen Kunstharzkörper, insbesondere aus Polyester mit oder ohne Füllstoffen oder aus Polyurethanen.

4. Filtrationsmodul nach einem der Ansprüche 1 bis 3, **gekennzeichnet durch** einen gemeinsamen Entwässerungssammler für alle Filtermembrantaschen.

5. Filtrationsmodul nach einem der Ansprüche 1 bis 4, **dadurch gekennzeichnet, dass** der flexible flüssigkeitsdurchlässige Kern ein schwammartiges Stützvlies (16) ist, das vorzugsweise aus Polypropylen, Polyethylen, Polyether, Glasfasergewebe oder PVC besteht oder ein Stützgewebe ist, das vorzugsweise aus Polypropylen, Polyethylen, einem Glasfasergewebe, PVC oder einem Phenolharzgewebe besteht und/oder dass entweder das schwammartige Stützvlies (16) oder das Stützvlies (16) mit zusätzlichen Kernelementen (17, 18, 19) mit der Membranfolie (13, 14) haftend verbunden ist.

6. Filtrationsmodul nach einem der Ansprüche 1 bis 5, **dadurch gekennzeichnet, dass** die einzelnen Kemelemente (17, 18, 19) flexible Rippen sind, die vorzugsweise an der Membranfolieninnenseite befestigt sind oder auf den Membraninnenseiten angeordnet sind und aus dem Membranmaterial selbst bestehen, wobei die Rippen (17, 18, 19) vorzugsweise im wesentlichen parallel zueinander angeordnet sind und/oder dass die sich gegenüberliegenden Filtermembraninnenflächen jeweils parallele Rippen (17 bzw. 18) aufweisen, die kreuzweise zu den Rippen der gegenüberliegenden Seite angeordnet sind.

7. Filtrationsmodul nach Anspruch 6, **dadurch gekennzeichnet, dass** die Kernelemente (17, 18, 19) untereinander und/oder mit der Membranfolie (13, 14) haftend verbunden sind.

8. Filtrationsmodul nach einem der Ansprüche 1 bis 7, **dadurch gekennzeichnet, dass** die Filtermembrantasche einen Kunststoffeinlegestreifen zur Verstärkung der Klebe- bzw. der Schweißnaht gegenüber einer aufsteigenden Strömung aufweist.

9. Filtrationsmodul nach einem der Ansprüche 1 bis 8, **dadurch gekennzeichnet, dass** der Halter (10) mit einem untergestellten Aufströmkanal verbunden ist, in dem eine strömungserzeugende Einrichtung wie eine Pumpe und/oder eine Belüftung und/oder mindestens ein strömungslenkender Leitkörper angeordnet ist/sind und/oder dass mehrere, jeweils mit Filtermembrantaschen bestückte Halter (10) übereinander angeordnet sind.

10. Filtrationsmodul nach einem der Ansprüche 1 bis 9, **dadurch gekennzeichnet, dass** die Filtermembrantaschen an ihren unteren Rändern befestigte Reinigungsfasern aufweisen, die sich in den Zwischenraum zwischen den einzelnen parallelen Membrantaschen erstrecken und/oder aus Kunststoff bestehen und vorzugsweise ein spezifisches Gewicht aufweisen, das kleiner ist als das spezifische Gewicht des zu reinigenden Abwassers und/oder elastisch sind und/oder einen Faserdurchmesser haben, der zwischen einer Mindestbreite von 0,5 mm und einer Obergrenze für die Faserbreite von 95 % des Abstandes zwischen parallelen Filtermembrantaschen beträgt.

## Claims

1. Filtration module for the cleaning of waste water with a multiplicity of filtration membrane pockets each having at least one opening (21) for the dewatering of its interior space and which are disposed vertically, parallel to one another and preferably at the same spacing to one another in a rigid rectangular parallelepipedal holder and so arranged that the intervening spaces lying between neighboring filter membrane pockets are traversed by a liquid, the holder having at least one suction line (20) for carrying off liquid drawn out through the filter membrane pocket opening (21), and the filter membrane pockets having a flexible liquid permeable core (16) and/or a plurality of flexible permeable core elements (17, 18, 19)
**characterized in that**
the filter membrane pockets are fixedly connected with the holder on opposite sides (12).

2. Filtration module according to claim 1, **characterized in that** the filter membrane pockets are comprised of two peripherically interconnected membrane foils (13, 14) which preferably are connected together by adhesive bonding, welding or by casting with another material that further preferably can form the cast holder, whereby preferably the membrane foils (13, 14) are composed of a thermosetting and/or elastomeric synthetic resin, preferably from a thermosetting phenolic resin, polyethylene, polyacrylonitrile, polyethersulfone and/or polyvinylchloride (PVC).

3. Filtration module according to one of the claims 1 or 2, **characterized in that** the holder (10) is comprised of plastic, preferably of a cast thermosetting synthetic resin body, especially of polyester with or without a filler or from polyurethane.

4. Filtration module according to one of the claims 1 to 3, **characterized by** a common dewatering collector for all of the filter membrane pockets.

5. Filtration module according to one of the claims 1 to 4, **characterized in that** the flexible liquid permeable core is a foam-like support fleece (16) which is comprised preferably of polypropylene, polyethylene, polyether, glass fiber textiles or PVC, or is a support textile which preferably is composed of polypropylene, polyethylene, glass fiber fabric, PVC or a phenolic fabric and/or that either the foam-like support fleece (16) or the support fleece (16) with additional core elements (17, 18, 19) are adhesively bonded with the membrane foil (13, 14).

6. Filtration module according to one of the claims 1 to 5, **characterized in that** individual core elements (17, 18, 19) are flexible ribs which preferably are fastened at the membrane foil inner sides or are arranged on the membrane foil inner side and are comprised of membrane parts themselves, whereby preferably the ribs (17, 18, 19) are arranged substantially parallel to one another and/or that the opposing filter membrane inner surfaces respectively have parallel ribs (17 or 18) which are arranged crosswise to the ribs of the opposite sides.

7. Filtration module according to claim 6, **characterized in that** the core elements (17, 18, 19) are adhesively bonded to each other and/or with the membrane foils (13, 14).

8. Filtration module according to one of the claims 1 to 7, **characterized in that** the filter membrane pockets have a synthetic resin insert strip for reinforcing the adhesive or weld seam with respect to a rising flow.

9. Filtration module according to one of the claims 1 to 9, **characterized in that** the holder (10) is connected with an inlet passage at its lower side in which a flow generating device like a pump and/Or an aerator and/or in which at least one flow-directing baffle body is arranged and/or that a multiplicity of holders (10) each equipped with filter membrane pockets are disposed one above another.

10. Filtration module according to one of the claims 1 to 9, **characterized in that** the filter membrane pockets have cleaning fibers fixed at their lower edges and which extend within the inner space of each pocket and/or are comprised of synthetic resin, and preferably having a specific gravity which is less than the specific gravity of the waste water to be cleaned and/or are elastic and/or have a fiber diameter which lies between a minimum width of 0,5 mm and an upper limit for the fiber width of 95% of the distance between parallel filtration membrane pockets.

## Revendications

1. Module de filtration pour l'épuration des eaux d'égout avec plusieurs poches de membrane de filtration qui présentent respectivement au moins une ouverture (21) destinée à enlever l'eau de leur intérieur, qui sont réalisées pour l'essentiel de façon plate et flexible et qui sont disposées verticalement, parallèlement et de préférence à distance égale l'une par rapport à l'autre dans un support rigide en forme de parallélépipède rectangle de telle manière que les intervalles situés entre des poches adjacentes de membrane filtrante peuvent être traversés par un liquide, ledit support présentant au moins une conduite d'aspiration (20) destinée à l'évacuation du liquide aspiré par les ouvertures (21) des poches de membrane filtrante, et les poches de membrane filtrante présentant un noyau flexible (16) perméable au liquide et/ou plusieurs éléments de noyau (17, 18, 19) flexibles perméables au liquide,
**caractérisé par le fait**
**que** les poches de membrane filtrante sont reliées sur toute la longueur solidement au support sur des côtés (12) fermés opposés.

2. Module de filtration selon la revendication 1, **caractérisé par le fait que** la poche de membrane filtrante se compose de deux feuilles de membrane (13, 14) qui sont reliées entre elles tout autour et qui, de préférence, sont reliées l'une à l'autre par collage, par soudage ou par coulée avec une autre matière qui, en outre, forme le support de préférence coulé, de préférence les feuilles de membrane (13, 14) étant réalisées en une matière plastique thermodurcissable et/ou élastomère, de préférence en une résine phénolique, un polyéthylène, un polyacrylonitrile, un polyéther-sulfone et/ou un polychlorure de vinyle (PVC) thermodurcissable.

3. Module de filtration selon l'une des revendications 1 ou 2, **caractérisé par le fait que** le support (10) se compose de matière plastique, de préférence d'un corps coulé de résine synthétique thermodurcissable, en particulier de polyester avec ou exempt de matières de remplissage ou de polyuréthanes.

4. Module de filtration selon l'une des revendications 1 à 3, **caractérisé par** un collecteur commun d'enlèvement d'eau pour toutes les poches de membrane filtrante.

5. Module de filtration selon l'une des revendications 1 à 4, **caractérisé par le fait que** le noyau flexible perméable au liquide est un non-tissé d'appui (16) spongieux qui, de préférence, se compose de polypropylène, de polyéthylène, de polyéther, de tissu de fils de verre ou de PVC ou est un tissu support qui, de préférence, se compose de polypropylène, de polyéthylène, d'un tissu de fils de verre, de PVC ou d'un tissu de résine phénolique, et/ou que soit le non-tissé d'appui (16) spongieux soit le non-tissé d'appui (16) avec des éléments de noyau supplémentaires (17, 18, 19) est relié de manière adhésive à la feuille de membrane (13, 14).

6. Module de filtration selon l'une des revendications 1 à 5, **caractérisé par le fait que** les éléments individuels de noyau (17, 18, 19) sont des nervures flexibles qui, de préférence, sont fixées sur la face interne de la feuille de membrane ou sont disposées sur les faces internes de la membrane et se composent de la matière même de la membrane, les nervures (17, 18, 19) étant disposées de préférence pour l'essentiel parallèlement l'une à l'autre, et/ou que les surfaces intérieures de la membrane filtrante placées en vis-à-vis présentent respectivement des nervures parallèles (17 ou bien 18) qui sont disposées en croix par rapport aux nervures du côté opposé.

7. Module de filtration selon la revendication 6, **caractérisé par le fait que** les éléments de noyau (17, 18, 19) sont reliés de manière adhésive entre eux et/ou à la feuille de membrane (13, 14).

8. Module de filtration selon l'une des revendications 1 à 7, **caractérisé par le fait que** la poche de membrane filtrante présente une bande d'insertion en matière plastique pour renforcer la couture collée ou bien la soudure par rapport à un courant ascendant.

9. Module de filtration selon l'une des revendications 1 à 8, **caractérisé par le fait que** le support (10) est relié à un canal à courant ascendant disposé là-dessous dans lequel est/sont disposé(s) un dispositif générateur de courant tel qu'une pompe et/ou un dispositif d'aération et/ou au moins un corps de guidage guidant le courant, et/ou que plusieurs supports (10) équipés respectivement de poches de membrane filtrante sont disposés l'un au-dessus de l'autre.

10. Module de filtration selon l'une des revendications 1 à 9, **caractérisé par le fait que** les poches de membrane filtrante présentent des fibres de nettoyage qui sont fixées sur leurs bords inférieurs et qui s'étendent dans l'intervalle entre les poches de membrane individuelles parallèles et/ou se composent de matière plastique et présentent de préférence un poids spécifique qui est inférieur au poids spécifique des eaux d'égout à épurer et/ou sont élastiques et/ou présentent un diamètre de fibre qui est compris entre une largeur minimale de 0,5 mm et une limite supérieure pour la largeur de fibre de 95 % de la distance entre des poches parallèles de membrane filtrante.
